# EUROPEAN PATENT SPECIFICATION

(11) **EP 4 006 392 B1**
(45) Date of publication and mention of the grant of the patent: **23.10.2024**
(21) Application number: 19938548.5
(22) Date of filing: 22.07.2019
(51) Int. Cl.: F16K 15/00, F16K 15/02, F16K 15/03, F16K 15/18, F16K 1/16, F16K 1/18, F16K 1/20, F16K 47/00, F16K 47/02, A01K 79/00, A01K 63/02, B65G 53/30, A01K 61/10, A01K 63/10

(54) **FISH PUMP WITH ACTUATED RETENTION VALVE AND RETENTION VALVE**
FISCHPUMPE MIT BETÄTIGTEM HALTEVENTIL UND HALTEVENTIL
POMPE À POISSONS À SOUPAPE DE RETENUE ACTIONNÉE ET SOUPAPE DE RETENUE

(43) Date of publication of application: 01.06.2022
(73) Proprietor: Maquinarias Sur S.A., 1009 Puerto Varas (CL)
(72) Inventor: WINTER BARROS, Patricio, Chonchi (CL)
(74) Representative: De Vidal Gonzalez, Maria Ester
(86) International application number: PCT/CL2019/050059
(87) International publication number: WO 2021/012061

(56) References cited:
- WO-A1-2012/167896
- CN-U- 207 428 250
- FR-A1- 2 618 517
- GB-A- 972 870
- JP-A- S 556 010
- JP-A- S53 148 724
- JP-A- S61 183 014
- JP-U- S57 134 464
- US-A- 3 883 111
- US-A- 3 883 111
- US-A- 5 622 205
- US-B2- 10 323 759

## Description

### DESCRIPTIVE MEMORY

The present invention relates to a fish pump according to claim 7, comprising a main tank with a feeding inlet which is opened and closed by a valve body according to claim 1. Said valve body comprises a check valve, also known as a non-return valve or check valve, and comprises an actuation mechanism that keeps the valve open or closed at the user's request.

The main object of the invention is to avoid one of the main problems in current fish pumps, associated with the obstruction of the closing path of a valve due to the presence of fish between said valve and its seat, preventing the proper closing of the valve, i.e., preventing the valve from properly seating in its seat. This effect also causes a relevant problem associated with the damage received by fish in the vicinity of a valve when it closes untimely, with "untimely" being understood as the closure occurring when one or more fish remain in the vicinity of the valve, particularly between the valve itself and its seat. Although the problem is transversal to different types of fish pumps, it occurs mainly in fish pumps that operate with vacuum-pressure, in which when vacuum is no longer applied in the main tank, the column of water and fish that goes up through the pump's feeding duct is returned, producing a suction effect on the check valve that is open, causing its closure by means of this suction effect. Furthermore, although this problem is also transversal to pumps that operate with live fish or dead fish, it is highly relevant in the case of operating with dead fish, since in the case of live fish the fish usually move allowing the proper closing of the valve.

### BACKGROUND

Fish pumps are widely used in the aquaculture industry for the transport of live or dead fish. Many of the fish pumps currently in use in the industry are those that operate under vacuum-pressure, comprising at least one feed pipe, at least one main tank, at least one outlet pipe and, alternatively, a hydrophore tank to join two or more main tanks into a single final outlet pipe. The most commonly main tanks used are those having at least one feeding inlet and at least one discharging outlet, wherein both the inlet and outlet comprise check valves of the flapper or swing check type arranged on a pivot shaft or hinge pin fixed to the main tank, and wherein the actuation of said valves occurs by the direction of fluid flow and/or pressure differences within the main tank, pivoting freely between an open position and a closed position according to the direction of fluid and/or pressure difference on either side of the valve. Such check valves allow the main tank to operate in a feeding configuration, with the inlet valve open and the outlet valve closed, or in a discharging configuration, with the inlet valve closed and the outlet valve open.

The operation of the outlet valve does not involve major risks of obstruction of the closing path and/or damage to the surrounding fish, since there is usually a sensor detecting the passage of air into the hydrophore tank downstream of the main tank, connected to the discharging outlet of the main tank, and it is possible to assign a programmed time to ensure that there are no fish in the vicinity of the outlet valve at the time of its closure. In this way it is possible to facilitate the fish passing either to the upstream side of the discharging outlet, into the main tank, or to the downstream side of the discharging outlet, into the hydrophore tank, when closure occurs. However, the outlet valve often closes in an untimely manner especially when there are tidal variations, which can cause untimely changes in the direction of flow within the main tank, closing the outlet valve as a result of such change in flow direction.

At the time of writing this specification, the inventors are not aware of solutions to the above problem for the fish pumps most commonly used in the industry, i.e., those that use flapper valves controlled by the action of the fluid flow. However, there are now solutions seeking to solve the problem of fish damage caused by the valves, either by changing the type of valve used in the main tank or by changing the type of pump to be used. For example, some fish pumps use main tanks with duckbill valves, where the duckbill valve is usually constructed in an elastomeric material with a "duckbill" shape, with an open end that receives the fluid flow and a flattened and closed end, whose opening is achieved when the fluid pressure exceeds a threshold given by the flexibility and/or structure of the flattened end. For reference, Patent US 4524805 A describes the structure of a duckbill-type valve.

Although the use of duckbill-type valves reduces damage to fish in valve opening and closing operations, limiting such damage to those more sensitive species that may suffer from scaling due to rubbing against the valve walls during closure, their use involves substantial modifications to current fish pumps, completely replacing the valve assembly with ones that present other problems associated with materiality and manner of operation, such as material fatigue, seal tightness durability and cost. This generates the need to replace all the valves more frequently than the current one, an undesirable operation since it requires stopping the operation of the main tank completely, thus substantially increasing the costs and disadvantages of this type of valves. In addition, the operation of duckbill valves does not prevent the obstruction of the valve closure, since during its closure it is also possible that one or more fishes remain obstructing the valve closure, losing the tightness of the seal, which causes the compressed air to be returned to the suction pipe in the case of pumps operating with vacuum-pressure.

In patent matters, publication CN 106472440 A defines a floating fish pump with a main tank having special inlet and outlet valves, with opening and closing controlled by a pneumatic system. The fish pump in this publication seeks to link the operation of the valves with the pneumatic system that is responsible for generating vacuum inside the tank during feeding, and pressurizing the inside of the tank during discharge, by actuating the valves that allow feeding and discharge simultaneously with the vacuum-pressure operations.

Although this solution could offer control over the damage received by the fish in valve closing operations, allowing to control the actuation of the valves by means of a special pneumatic system that integrates the valves, such a system is quite complex and costly, involving substantial modifications to the existing fish pumps, requiring the installation of special valves inside the main tank and the implementation of a complex pneumatic circuit integrated to the vacuum-pressure circuit of the fish pump.

On the other hand, there are several flapper-type valve solutions that incorporate an opening and/or closing control, which solutions could be implemented to solve the fish damage problem. By way of example, Patent US 3942551 A describes a flapper-type check valve incorporating a hydraulic damping mechanism, wherein said damping mechanism is aimed at preventing the flapper from slamming against its seat during closing. In particular, the damping mechanism is configured to dampen the closing of the valve and allow free opening of the valve, without flow restrictions in the opening direction.

While a valve of the type described in Patent US 3942551 A would prevent closing of the valve at untimely, being possible to control the closing moment to avoid the presence of fish in the vicinity of the valve, the actuation mechanism proposed in that patent is complex, requiring substantial intervention of both the flapper and the outer body of the valve. In fact, the damping mechanism in this case has a hydraulic cylinder with a special shaft that enters inside the space where the valve is located, connecting articulately to the flapper by means of a special connection. In addition, the external damping mechanism comprises a hydraulic fluid circuit with special means to restrict the flow of hydraulic fluid in the closing direction of the valve and special means to allow the free flow of hydraulic fluid in the opening direction of the valve. Finally, the damping mechanism in this case acts during the entire closing movement of the valve, actively intervening in the seal between the flapper and its seat, in the closed position of the valve. This generates vulnerability in the tightness of the valve seal, since the entire closing movement is controlled by the damping mechanism and, therefore, the tightness of the seal depends on the correct operation of the damping mechanism.

In another example, GB 2073375 A also discloses a flapper check valve incorporating a damping mechanism. Unlike the previous case, the mechanism in this publication is formed by a pneumatic piston arranged outside the valve body, directly connected to the flapper shaft by means of a connecting rod-crank type mechanism, transforming the linear movement of the piston into a rotational or pivoting movement of the flapper.

In this context, the valve of the type described in GB 2073375 A would also prevent untimely closing of the valve, but with an actuation mechanism of less complexity than that proposed in the previous case. Said mechanism is fixedly connected to the valve shaft, which in turn is fixed to the flapper so that the rotation of the shaft causes the flapper to move together. However, this solution also generates a problem of vulnerability in the tightness of the flapper seal on its seat, since the actuating mechanism is actively involved during valve closure as in the previous case.

Another type of valve is known from US 3 883 111, which discloses a valve structure having a bowl-shaped clapper-type check valve member mounted on the extended end of an arm which is mounted for swinging movement within the valve body.

Yet another type of check valve is known from US 5 622 205.

Therefore, there is a need for a flapper-type check valve solution in a fish pump that solves the problems of the prior art, comprising an actuation mechanism that prevents clogging of the valve closure path by untimely closure of the valve but without participating in the tight seal between the valve and its seat, i.e., preventing such seal from depending on the operation of the actuation mechanism.

### DESCRIPTION OF THE INVENTION

The invention relates to a fish pump according to claim 7 comprising a valve body according to claim 1, and to a valve body according to claim 1 comprising an actuated check valve.

The fish pump comprises:
- a feeding section, for fish intake;
- at least one main tank comprising:
   ∘ at least one feeding inlet;
   ∘ at least one discharging outlet; and
- a valve body arranged at each feeding inlet and at each discharging outlet, for controlling the feed and discharge operations of each main tank.

At least one valve body arranged at a feeding inlet of at least one main tank comprises a check valve of the flapper or swing check type, said flapper arranged to move pivotally in a closing path toward a closed position and in an opening path toward an open position, pivoting about a pivot axis located within the valve body. The pivot axis comprises at least one stopper element solidly attached to such pivot axis, preferably two stopper elements arranged symmetrically in relation to the pivot axis. The stopper element is configured to block the closing path of the flapper when it intervenes in said path, resulting from the actuation of the pivot axis. A person skilled in the art of the present application will be able to determine any configuration of the stopper element that will block the flapper closing path.

In this context, the fish pump comprises at least one actuation mechanism, preferably arranged on the outside of the valve body comprising the flapper, but which may be integrated to the inside thereof, wherein said actuation mechanism is configured to operate in an activated mode and in a deactivated mode, triggering a movement on the pivot axis. For this purpose, the actuation mechanism comprises a first section fixed to the pivot axis, such that when the actuation mechanism is in an activated mode, said first section moves attached to the pivot axis, causing movement of said pivot axis towards an activated position. According to the preferred embodiment the actuation mechanism is arranged on the outside of the valve body, comprising a second section connected to the outside of the valve body and wherein the first section is fixed to a portion of the pivot shaft protruding towards the outside of the valve body, so that when the actuation mechanism is in activated mode, said first section moves attached to the pivot shaft, causing the movement of said pivot shaft towards an activated position. The arrangement of the actuation mechanism on the outside of the valve body facilitates the actuation mechanism to be actuated manually or automatically in case of an obstruction of the valve despite the normal operation of the actuation mechanism, either by a fish or other bodies. This avoids a prolonged stoppage of the pumping system since the release of the obstruction from inside the pump is not necessary, as is the case with existing prior art solutions.

Consequently, during the operation of the fish pump, the latter's components interact with each other so that:
- the flapper pivots freely to the open position on the opening stroke, being actuated by the feeding of fish from the feeding section and/or by the application of vacuum to the interior of a main tank, the flapper being lifted freely with the entry of fish into the interior of the main tank.
- the actuating mechanism switches to the activated mode at the request of a user by rotating the pivot shaft and the at least one stopper element to the activated position, wherein said at least one stopper element is positioned below the flapper which is in the open position, blocking the closing path of the flapper and holding it in said open position at the user's request.
- The actuating mechanism switches to deactivated mode at the user's request, preferably some t after the end of the fish feeding stage into the main tank, preventing the presence of fish in the vicinity of the valve. In said deactivated mode the actuating mechanism rotates the pivot shaft and the at least one stopper element to a deactivated position, a position in which said stopper element is separated from the flapper outside the range of movement of the closing path of the flapper.
- At the end of the fish feed stage and with the actuating mechanism in the off position, the stopper element being outside the closing path, the flapper pivots freely in the closing path towards the closed position, contacting a flapper seat arranged inside the valve body, which ensures the tight seal of the flapper.

According to one embodiment of the invention the fish pump comprises at least two main tanks, each with two flapper-type check valves, one at the feeding inlet and one at the discharging outlet. At least one of the check valves arranged at the feeding inlet or at the outlet of each tank comprises the actuation mechanism of the present invention. Preferably, however, both the check valves disposed at the inlet and at the outlet comprise the actuation mechanism of the present invention. Likewise, a mode of the invention may comprise three or more main tanks, configured as indicated above.

According to the invention the stopper element comprises a closing portion configured to contact and press a face of the flapper when it is in the closed position, ensuring the tight seal of the flapper with its seat. The closing portion of the stopper element is also attached to the pivot axis of the flapper, so that its operation is also controlled by the actuation mechanism which is connected to such pivot axis. In particular, the operation of the closing portion of the stopper element takes place mainly when the flapper is already in the closed position, i.e. when the actuating mechanism is in deactivated mode. According to the present embodiment, said deactivated mode comprises maintaining a closing pressure on the flapper by means of the actuating mechanism, so that the flapper is pressed into its seat through the closing portion of the stopper element. A person skilled in the art of the present application will be able to determine any configuration of the closing portion of the stopper element that allows a face of the flapper to be pressed into the closed position.

Normally, when the pumps stop suctioning during the vacuum cycle, in addition to the problem of damage to the fish there is the problem of the water/fish column being pulled back through the feed line, so that at the start of the next cycle more energy and time is required to re-mobilize the water/fish column. In addition, it usually happens that the speed at the beginning of the cycle is lower, since in the main tank where the vacuum is initiated the pressure is atmospheric as a starting point, increasing the time to generate enough vacuum to suck the water/fish column. This results in the fact that, at the beginning of the vacuum (suction) cycle, normally only water is pumped and no fish. Ultimately, there is considerable inefficiency in the pumping process.

The embodiment of the invention comprising a stopper element with closing portion is especially useful for solving the above problem in fish pumps of the vacuum-pressure type and comprising two or more main tanks, said main tanks operating alternately in vacuum and pressure cycles. Indeed, the closing portion of the stopper element allows to keep closed the flaps of a first main tank which is waiting for the start of the next suction (vacuum cycle), in order to make vacuum safely, avoiding any risk of flaps opening. In this way, at the end of pumping a second main tank that is in a pumping state (pressure cycle), and after closing its flaps, it is possible to start the next cycle with vacuum accumulated in the first main tank. This effect minimizes the time to recover the water/fish column that is returned through the feed pipeline, in addition to maintaining a constant suction velocity. This operating characteristic can be optimized by controlling the vacuum and pressure flow in the vacuum-pressure circuit of the fish pump, by controlled opening of a vacuum/pressure valve in the vacuum/pressure circuit. In this way, the suction can be terminated by lowering the vacuum intensity (lower flow rate) gradually, and thus achieving minimal backflow of the water/fish column.

According to another embodiment of the invention, the actuation mechanism may comprise at least one piston, with a first end connected to the outside of the valve body and a second end connected to a connecting rod-crank type mechanism, which transforms the linear movement of the at least one piston into a rotational movement. The rotational motion in this case is transmitted to the pivot shaft through the first section of the actuation mechanism which is attached to the portion of the pivot shaft protruding outwardly from the valve body. A skilled person in motion-driving actuation mechanisms will be able to find various types of mechanisms that allow actuating a movement of the pivot shaft between an activated position and an activated position, either by rotation of the pivot shaft or translation thereof. Furthermore, a skilled person in this technical subject will be able to select different types of pistons to meet the requirements of the invention in accordance with the present embodiment, including pneumatic pistons, hydraulic pistons, electric pistons, etc.

According to the invention, the flapper is connected to the pivot shaft by means of at least one bushing fixed to the flapper, preferably two bushings, one towards each end of the pivot shaft. Said bushing has a diameter larger than the diameter of the pivot shaft, favoring the existence of a "play", clearance or loose fit between the pivot shaft and the bushing, which in turn favors the seating of the flapper on its seat, during the closing of the valve. Furthermore, the pivot shaft can be connected to the inside of the valve body by means of two bearings fixed to the inside of the valve body, wherein at least one of said bearings has a rotary seal to prevent communication of fluid from the inside of the valve body to its outside, through the portion of the pivot shaft protruding outwardly from the valve body for contact with the actuation mechanism, when the latter is on the outside of the valve body.

On the other hand, the actuation mechanism may be automatically controlled by a control module, wherein said control module controls the activated and deactivated modes of the actuation mechanism by means of activation types associated with the operation of the fish pump, employing sensors, for example, level, flow and/or pressure sensors arranged inside the valve body or inside each main tank to measure operating parameters of the fish pump. In this context, the actuation mechanism is responsible for controlling, either manually or automatically, the time t in which the check valve is kept open. By way of example, for an automatic operation of the actuation mechanism in a pump operating by means of vacuum-pressure the main tank may comprise a top level sensor which, when activated, stops applying vacuum to the interior of the main tank and after this a time t is waited for to close the flapper, passing from the activated mode to the deactivated mode of the actuation mechanism, wherein said time t may be predefined and programmed in the control module that operates the actuation mechanism. Another alternative is by means of a sensor that detects the presence of fish obstructing the closing path of the valve, the detection of which would allow the valve to be held open before closing or, even, to operate the valve to open and facilitate the fish to leave the vicinity of the valve.

According to one embodiment of the invention the valve body, which has one end with an inlet opening and another end with an outlet opening, has flanges arranged at an inclination with respect to a vertical plane at each end. This feature facilitates maintenance and replacement operations of the check valves, facilitating the uncoupling of the entire valve body, including the actuation mechanism, from the main tank, without the need to disassemble the rest of the piping or components of the fish pump for the replacement of the valve body with a new one and/or for maintenance, avoiding prolonged stoppage of the equipment.

According to an alternative embodiment the valve body arranged at each discharging outlet of each main tank also comprises a check valve of the flapper type, said flapper being arranged to move pivotally in a closing path towards a closed position and in an opening path towards an open position, pivoting about a pivot axis located inside the valve body. While according to the main mode the pivot movement of the flapper pivot at the outlet of the main tank is free, it is also possible to provide a discharging outlet with actuated valve body such as that disposed at the feeding inlet, comprising the actuation mechanism of the invention.

On the other hand, the feed section of the fish pump may comprise different types of equipment used depending on the type of pump to be used. By way of example, said feeding section may comprise a feeding tray that feeds the fish towards the interior of each main tank by gravity, selecting the main tank that will receive the fish by means of a manually or automatically operated flipper-type paddle, in which case the fish pump comprises a pressurization circuit that injects air towards the interior of each main tank once the fish feeding is finished, pressurizing the interior of the tank and thereby activating the closing of the valve arranged at the inlet and the opening of the valve arranged at the outlet.

Alternatively, and according to the preferred embodiment, the feed section of the fish pump is a feed duct through which the fish are directed into the interior of each main tank. In this case, the fish pump comprises a vacuum-pressure circuit that, on the one hand, sucks air into the interior of each main tank, causing the flapper to move towards its open position and the fish to enter the interior of each main tank, and on the other hand, injects air into the interior of the main tank once the fish feeding is finished, pressurizing the interior of the main tank and triggering the fish discharge stage, the valve closing at the inlet and the valve opening at the outlet.

### BRIEF DESCRIPTION OF THE FIGURES

As part of the present invention the following representative figures thereof are presented, which show preferred embodiments of the invention and, therefore, are not to be considered as limiting the definition of the subject matter claimed.
Figures 1a, 1b and 1c show representative schemes of a flapper type check valve and of its operation, in accordance with the prior art.
Figures 2a, 2b, 2c, 2d, 2e and 2f show representative schematics of a flapper-type check valve body and of its operation, in accordance with one embodiment of the present invention.
Figure 3a shows a perspective view of a fish pump in accordance with one embodiment of the present invention.
Figure 3b shows a plan view of the fish pump according to figure 3b.
Figure 4a shows a perspective view of a main tank of a fish pump in accordance with an embodiment of the present invention.
Figure 4b shows a cutaway view of the main tank according to figure 4a.

### DETAILED DESCRIPTION OF A PREFERRED EMBODIMENT

With reference to the accompanying figures, the preferred embodiment of the invention comprises the features and advantages described below.

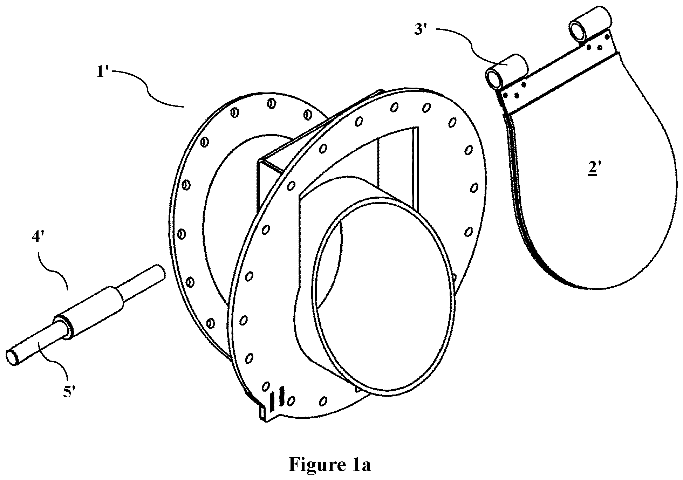

Figure 1a shows a schematic of a check valve body (1') of the flapper or swing check type in accordance with the prior art of the present invention. In said figure it can be appreciated that the valve body (1') is mainly comprised of a disc or flapper (2'), which forms the main element of the valve, and a hinge mechanism formed of three parts: a first coupling end fixed to the flapper, illustrated by two bushings (3'), a second coupling end fixed to the inside of the main tank or to the inside of the valve body, illustrated by a bushing (4'), and a pivot shaft (5') which is inserted into said bushings (3', 4').

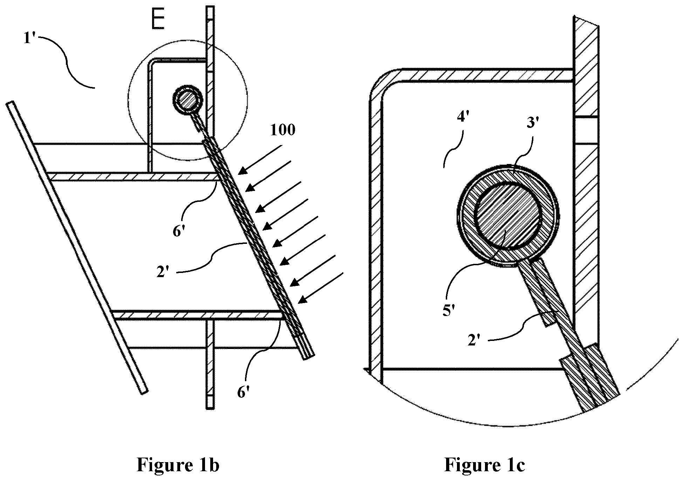

The hinge mechanism shown in figure 1a is a usual one, its main peculiarity being that there is a certain clearance between the coupling ends and the pivot shaft, a clearance given by the diameter of the coupling ends with respect to the diameter of the pivot shaft, wherein the latter is smaller. This characteristic allows the flapper to have a "play" or clearance that favors the seating of the flapper in its seat in the closed position, since the closing of the valve is activated by the change of flow direction or pressure difference (100) inside the main tank. This effect presses the flapper (2') towards its seat (6') and, as the flapper has a "play" with respect to its axis it provides certain freedom of movement that improves the seat of the flapper and thus the seal of the feed opening, as shown in Figure 1b. This is the main advantage of the flapper-type valves used in today's fish pumps, explaining why they are widely used despite their disadvantages in relation to clogging of the seal and/or damage to the fish due to untimely valve closure. Figure 1c shows detail E of figure 1b, where the arrangement of the hinge mechanism (3', 4', 5') according to the prior art can be more clearly noted.

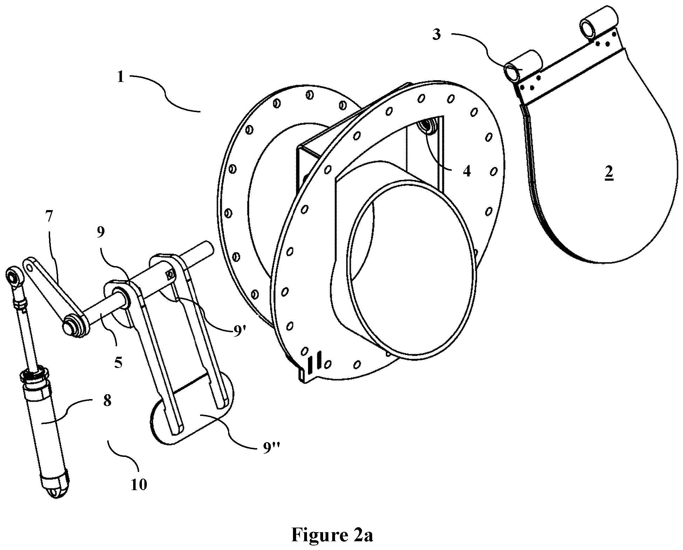

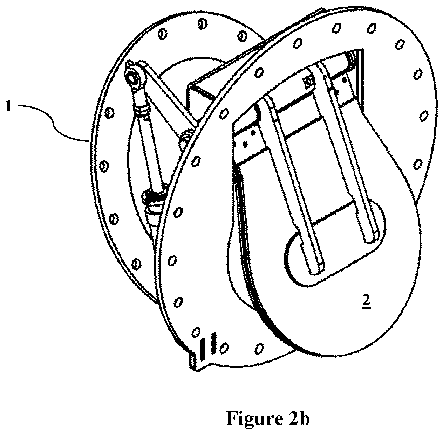

On the other hand, figure 2a shows an exploded diagram of a check valve body (1) of the flapper or swing check type in accordance with the present invention. In said figure it can be appreciated that the valve body (1) is mainly comprised of a disc or flapper (2), which forms the main element of the valve, and an actuation mechanism (10) which replaces the prior art hinge mechanism. In this context, according to the preferred mode, the actuation mechanism (10) of the present invention is formed by: a first section (7) fixed to a portion of the pivot shaft (5) protruding towards the outside of the valve body (1) and a second section (8) connected to the outside of the valve body (1), so that said first section (7) moves attached to the pivot shaft (5). Furthermore, it can be appreciated that the pivot shaft (5) is connected to the valve body (1) by means of bearings (4) arranged in said valve body. Alternatively, the first section of the actuating mechanism is directly connected to the pivot shaft inside the valve body, said actuating mechanism being integrated inside the valve body. Figure 2b corresponds to a perspective view of the assembled valve body (1), showing the arrangement of the components of said valve body (1) in operation.

Additionally, figure 2a shows two stopper elements (9') attached to the pivot axis (5), wherein said stopper elements comprise a closing portion (9"). Alternatively, the stopper elements (9') and the closing portion (9") form a fixing device (9) for fixing the flapper (2). Said stopper elements (9') being configured and arranged to lock the closing path of the flapper (2), having a configuration to receive a first face of the flapper (2) when the same is directed to the closed position. According to the preferred embodiment the pivot axis comprises at least one stopper element (9'). Furthermore, the closing portion (9") of the stopper elements is configured and arranged to press a second face of the flapper (2) towards its seat (6), thus keeping it closed.

On the other hand, in Figures 2a and 2b it is possible to appreciate that the structure of the disc or flapper (2) is practically the same as the prior art (2'), comprising two bushings (3. 3') for its pivotal connection to the pivot axis (5, 5'). According to a preferred embodiment, the disc or flapper (2) comprises at least one bushing (3). Likewise, in Figures 2a and 2b it can be seen that in this case the pivot shaft (5) is connected to the main tank structure or to the inside of the valve body by means of two bearings (4) fixed to the inside of the valve body (1). At least one of said bearings, in particular that by which the pivot shaft (5) projects outwardly from the valve body (1) for connection with the first section (7) of the actuation mechanism, has a rotary seal to prevent fluid communication from the inside of the valve body (1) to its outside, preventing fluid leakage from the inside of the main tank.

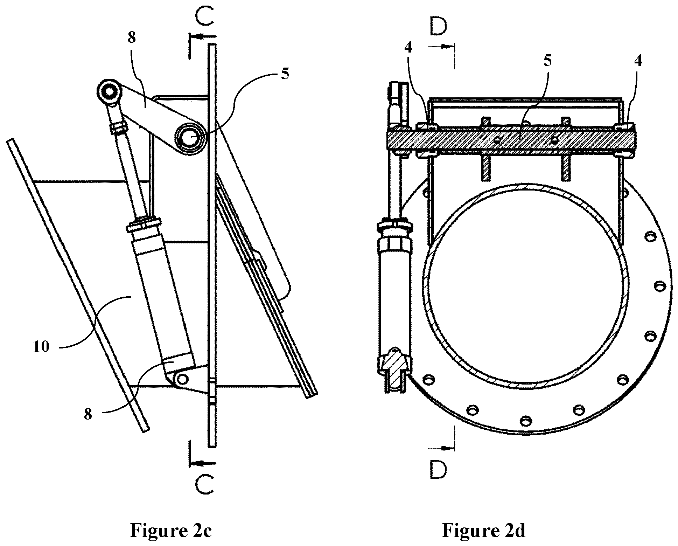

In greater detail, Figure 2c shows a side view of the valve body (1) of Figure 2b, where additional details of the preferred embodiment of the actuation mechanism (10) can be noted with its first section (7) fixed to the pivot axis (5) and its second section (8) connected to the outside of the valve body (1). Figure 2d is a C-C cutaway view of figure 2c, showing in detail the arrangement of the pivot shaft (5) in the valve body (1), by means of two bearings (4) wherein at least one of them allows the pivot shaft (5) to pass through the valve body (1) with its portion protruding towards the outside of said valve body (1), so that to connect with the first section (7) of the actuation mechanism.

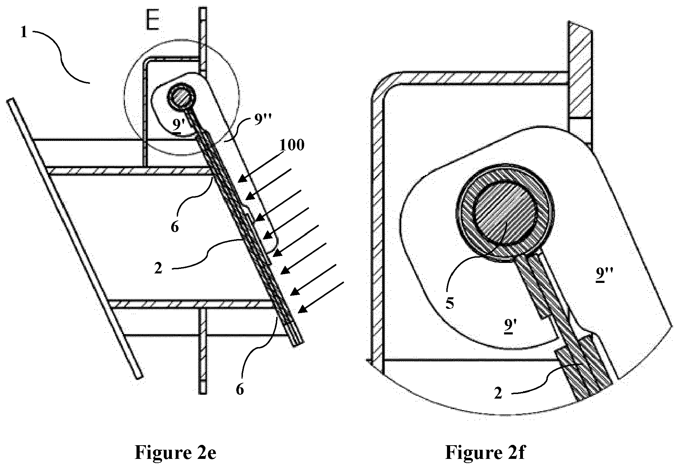

The special configuration of the actuation mechanism (10) and the pivot shaft (5) of the invention in addition to providing control over the closure of the flapper, keeping it open or closed on demand, retains the main advantage of flaps which do not have an actuation mechanism, that is, it maintains the clearance of the hinge mechanism of the prior art, clearance provided by the diameter of the bushing(s) (3) in the disc or flapper (2) with respect to the diameter of the pivot shaft (5), wherein the latter has a smaller diameter. Therefore, one of the main advantages of the present invention lies in combining the possibility of keeping the flapper (2) open even when the latter is directed towards its closed position and, alternatively, keeping the flapper (2) closed during the vacuum cycle, by activating the actuation mechanism (10), and, when said actuation mechanism (10) is deactivated, allowing the flapper to maintain the "play" or fit clearance that favors the seating of the flapper (2) on its seat (6) in the closed position in favor of the change of flow direction or pressure difference (100) to the interior of the main tank, as shown in Figure 2e. Figure 2f shows detail E of figure 2e, where the arrangement of the stopper element (9') and the closing portion (9") can be more clearly noted in accordance with the present invention.

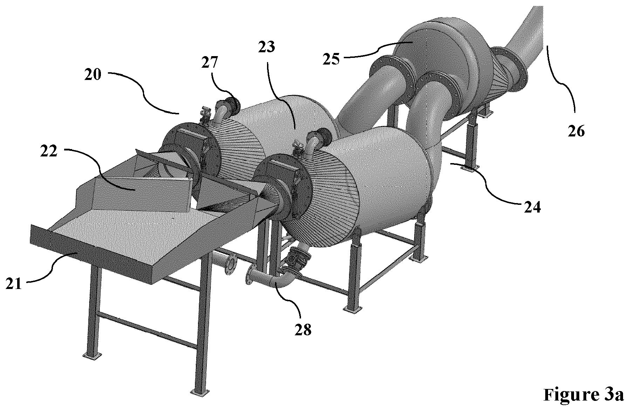

Figure 3a shows a representative schematic of a gravity-loading fish pump (20), comprising as a feed section an inclined feed tray (21) which comprises a flipper-type paddle (22), in this example, for selective gravity feeding of fish into the interior of two main tanks (23). Additionally, in Figure 3a it can be seen that the fish pump of this example comprises two outlet ducts (24) from the main tanks (23) and into a hydrophore tank (25), from which a single final outlet duct (26) is provided. Finally, it can be seen that the main tanks (23) also include air inlets and outlets (27, 28) for the pressurization of the tanks, which in this case by being fed by gravity, operate only with pressure. Notwithstanding, said air inlets and outlets can be configured to operate with vacuum-pressure in fish pumps employing such mechanism.

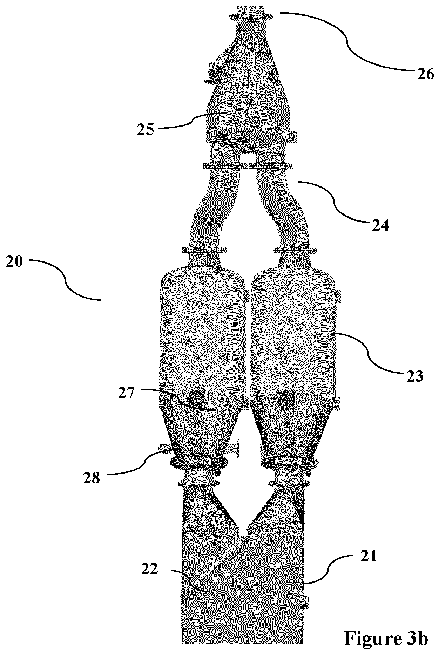

Next, Figure 3b shows a plan view of the fish pump (20) in Figure 3a, where the arrangement of the feed section with the feed tray (21) of the main tanks (23), can be more clearly noted, each with its feeding inlet and discharging outlet, the outlet ducts (24) communicating each main tank (23) with the hydrophore tank (25) and the final outlet duct (26) of the pump. In the same way, the device of the air inlets and outlets (27, 28) that each main tank (23) has for the pressurization or vacuum-pressure circuit, as the case may be, can be seen.

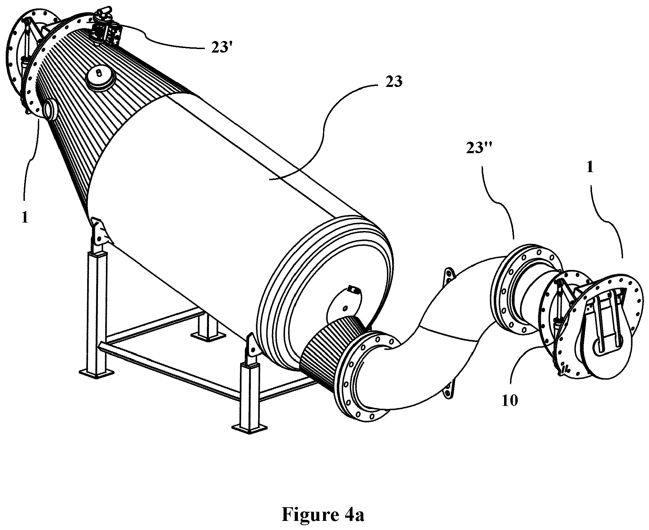

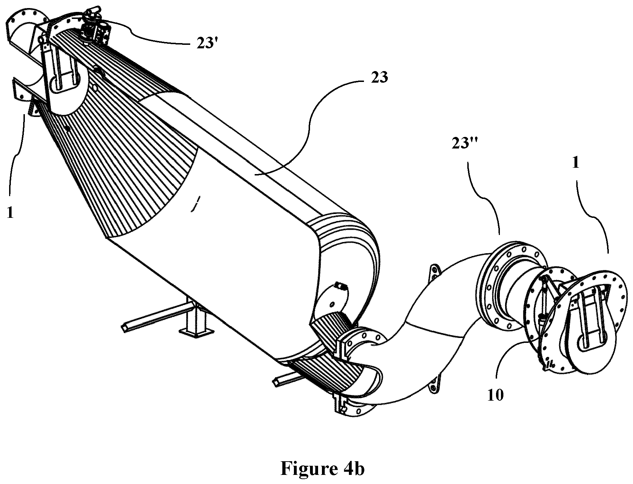

Finally, Figure 4a shows a perspective view of a main tank (23) according to one embodiment of the present invention, comprising a check valve body (1) with actuation mechanism (10) both at the feeding inlet (23') and at the discharging outlet (23"). Figure 4b shows a cutaway view of the main tank of figure 4a, where the characteristics and arrangement of the check valve bodies (1) is noted in greater detail in accordance with the embodiment shown, and being possible to visualize that, in this case, the valve body (1) at the discharging outlet is positioned downstream of a discharge duct which forms an integral part of the main tank (23).

## Claims

1. A valve body (1) for a fish pump, comprising:
- a check valve of a flapper type, defined hereinafter as flapper (2), said flapper (2) being arranged to move pivotally in a closing path toward a closed position and in an opening path toward an open position;
- a pivot shaft (5) which is located within the valve body (1), wherein the flapper (2) is arranged to move pivotally about the pivot shaft (5);
- a flapper seat (6) disposed inside the valve body (1); and
- at least one actuation mechanism (10), said actuation mechanism (10) being configured to operate in an activated mode and a deactivated mode;
wherein the actuation mechanism (10) comprises a first section (7) fixed to the pivot shaft (5), such that when the actuation mechanism (10) is in an activated mode, said first section (7) moves attached to the pivot shaft (5), causing said pivot shaft (5) to rotate about itself, towards an activated position;
wherein the pivot shaft (5) comprises at least one stopper element (9') attached to said pivot shaft (5),
wherein, during operation of the valve body (1):
- the actuation mechanism (10) can be switched to activated mode at the request of a user by rotating the pivot shaft (5) and the at least one stopper element (9') to the activated position, wherein a part of said at least one stopper element (9') positioned below the flapper (2) blocks the closing path of the flapper (2) and holds it in said open position wherein the flapper (2) pivots freely to the open position in the opening path;
- the actuation mechanism (10) can be switched to a deactivated mode at the request of the user by rotating the pivot shaft (5) and the at least one stopper element (9') to a deactivated position wherein the part of said at least one stopper element (9') positioned below the flapper (2) is separated from the flapper (2) outside the range of movement of the closing path, wherein the flapper (2) pivots freely in the closing path towards the closed position, contacting a flapper seat (6) arranged inside the valve body (1), which ensures the tight seal of the flapper (2), and wherein a closing portion (9") of the stopper element (9') is configured to contact and press a face of the flapper (2), holding it in said closed position, wherein the deactivated mode of the actuation mechanism (10) comprises maintaining a closing pressure on the flapper (2) such that the flapper (2) is pressed into the flapper seat (6) through the closing portion (9") of the stopper element (9'), wherein
- the flapper (2) is connected to the pivot shaft (5) by at least one bushing (3) fixed to the flapper (2), wherein said bushing (3) has a diameter greater than the diameter of the pivot shaft (5);
- the closing portion of the stopper element (9') is also attached to the pivot shaft (5), so that the operation of the stopper element (9') is also controlled by the actuation mechanism (10), that is, the operation of the closing portion (9") of the stopper element (9') takes place mainly when the actuating mechanism is in deactivated mode.

2. The valve body (1) according to claim 1, **characterized in that** the actuation mechanism (10) is arranged on the outside of the valve body (1), wherein the first section (7) of the actuation mechanism (10) is fixed to a portion of the pivot shaft (5) protruding outwardly from the valve body (1), and wherein the actuation mechanism (10) comprises a second section (8) connected to the outside of the valve body (1).

3. The valve body (1) according to claim 2, **characterized in that** the actuation mechanism (10) comprises at least one piston with a first end connected to the outside of the valve body (1) and a second end connected to a connecting rod-crank type mechanism, which transforms the linear movement of the at least one piston into a rotational movement, wherein said rotational movement is transmitted to the pivot shaft (5) through the first section (7) of the actuation mechanism (10) which is fixed to the portion of the pivot shaft (5) protruding towards the outside of the valve body (1).

4. The valve body (1) according to any one of claims 1 to 3, **characterized in that** the pivot shaft (5) is connected to the interior of the valve body (1) by means of two bearings (4) fixed to the interior of the valve body (1), wherein at least one of said bearings (4) has a rotary seal to prevent communication of fluid from the interior of the valve body (1) to its exterior through the portion of the pivot shaft (5) protruding outwardly from the valve body (1).

5. The valve body according to any one of claims 1 to 4, **characterized in that** the actuation mechanism (10) is automatically controlled by a control module, wherein said control module controls the activated and deactivated modes of the actuation mechanism by means of activation types associated with the operation of the valve body (1), employing sensors disposed inside the valve body (1).

6. The valve body according to any one of claims 1 to 5, **characterized in that** it comprises one end with an inlet opening and another end with an outlet opening, wherein said ends have flanges arranged at an inclination with respect to a vertical plane.

7. A fish pump (20) comprising:
- a feeding section, for fish intake;
- at least one main tank (23) comprising:
∘ at least one feeding inlet (23');
∘ at least one discharging outlet (23"); and
∘ a valve body (1) according to any one of claims 1 to 6, the valve body (1) being arranged at each feeding inlet (23') and at each discharging outlet (23"), for controlling the feed and discharge operations of each main tank (23), respectively.

8. The fish pump (20) according to claim 7, **characterized in that** the actuation mechanism (10) of the valve body (1) is automatically controlled by a control module, wherein said control module controls the activated and deactivated modes of the actuation mechanism (10) by means of activation types associated with the operation of the fish pump (20), employing sensors disposed inside the valve body (10) or inside each main tank (23) to measure operating parameters of the fish pump (20).

9. The fish pump (20) according to claim 8, **characterized in that** it comprises at least one upper level sensor disposed to the interior of at least one main tank (23), wherein with the activation of said level sensor vacuum is no longer applied to the interior of the main tank (23), there being a time t to pass from the activated mode to the deactivated mode of the actuation mechanism (10), causing the flapper (2) to close, wherein said time t may be predefined and programmed in the control module operating the actuation mechanism (10).

10. The fish pump (20) according to any one of claims 7 to 9, **characterized in that** the feeding section is a feeding duct through which the fish are directed towards the interior of each main tank (23), comprising a vacuum-pressure circuit which, on the one hand, sucks air into the interior of each main tank (23), causing the flapper (2) of the valve body (1) to move towards its open position and the fish entering towards the interior of each main tank (23), and on the other hand, injects air into the interior of the main tank (23) once the fish feeding finishes.

11. The fish pump (20) according to claim 10, **characterized in that** the stopper element (9') of the valve body (1) comprises a closing portion (9") configured to contact and press a face of the flapper (2) of the valve body (1) when it is in the closed position, holding it in said closed position;
wherein the deactivated mode of the actuation mechanism (10) comprises maintaining a closing pressure on the flapper (2) such that the flapper (2) is pressed into its seat (6) through the closing portion of the stopper element (9'); and
when the fish pump (20) comprises at least two main tanks, the locking portion maintains closed the flappers (2) of a first main tank (23) which is in a vacuum cycle, while a second tank is in a pressure cycle.

12. The fish pump (20) according to claim 11, **characterized in that** the vacuum-pressure circuit comprises a controlled opening vacuum/pressure valve.

13. The fish pump (20) according to any one of claims 7 to 12, **characterized in that** the feeding section is a feeding tray (21) that feeds fish into the interior of each main tank (23) by gravity, comprising a pressurization circuit that injects air into the interior of each main tank (23) upon completion of fish feeding.

## Patentansprüche

1. Ein Ventilkörper (1) für eine Fischpumpe, bestehend aus
- ein Rückschlagventil mit einer Klappe, im Folgenden als Klappe (2) bezeichnet, wobei die Klappe (2) so angeordnet ist, dass sie sich schwenkbar in einem Schließweg zu einer geschlossenen Position und in einem Öffnungsweg zu einer offenen Position bewegt;
- eine Schwenkwelle (5), die sich innerhalb des Ventilkörpers (1) befindet, wobei die Klappe (2) so angeordnet ist, dass sie sich schwenkbar um die Schwenkwelle (5) bewegt;
- einem Klappensitz (6), der im Inneren des Ventilkörpers (1) angeordnet ist; und
- mindestens einen Antriebsmechanismus (10), wobei der Antriebsmechanismus (10) so konfiguriert ist, dass er in einem Einschaltmodus und einem Ausschaltmodus arbeitet;
wobei der Antriebsmechanismus (10) einen ersten Abschnitt (7) umfasst, der an der Schwenkwelle (5) befestigt ist, so dass, wenn sich der Antriebsmechanismus (10) in einem aktivierten Modus befindet, sich der erste Abschnitt (7) in Verbindung mit der Schwenkwelle (5) bewegt, wodurch die Schwenkwelle (5) veranlasst wird, sich um sich selbst in Richtung einer aktivierten Position zu drehen;
wobei die Schwenkwelle (5) mindestens ein an der Schwenkwelle (5) befestigtes Stopfenelement (9') umfasst, wobei;
wobei während des Betriebs des Ventilkörpers (1):
- der Antriebsmechanismus (10) auf Wunsch des Benutzers in den aktivierten Modus geschaltet werden kann, indem die Schwenkwelle (5) in die aktivierte Position gedreht wird, wobei ein Teil des mindestens einen Stopfens (9'), der sich unter der Klappe (2) befindet, den Schließdurchgang der Klappe (2) blockiert und sie in der offenen Position hält, wobei die Klappe (2) frei in die offene Position im Öffnungsweg schwenkt, wobei die Klappe (2) frei in die geöffnete Position im Öffnungsweg schwenkt;
- Der Antriebsmechanismus (10) kann auf Wunsch des Benutzers in einen deaktivierten Modus werden, durch Drehen der Schwenkwelle (5) und des mindestens einen Stopfenelements (9') in eine deaktivierte Position, in der der Teil der sich das mindestens eine Stopfenelement (9') unterhalb der Klappe befindet, von der Klappe (2) außerhalb des Bewegungsbereichs des Schließwegs getrennt ist, wobei die Klappe (2) frei in dem Schließweg in Richtung der geschlossenen Position schwenkt, wobei sie einen Sitz der Klappe (6) berührt, der innerhalb des Ventilkörpers (1) angeordnet ist, was ein dichtes Schließen der Klappe (2) sicherstellt, und wobei ein Dichtungsabschnitt (9") des Kegelelements (9') so konfiguriert ist, dass er eine Fläche der Klappe (2) berührt und niederdrückt, wobei der deaktivierte Modus des Betätigungsmechanismus (10) das Aufrechterhalten eines Schließdrucks (100) auf die Klappe (2) umfasst, so dass die Klappe (2) durch den Dichtungsabschnitt (9") des Stopfenelements (9') in den Sitz der Klappe (6) gedrückt wird;
Wo
- die Klappe (2) mit der Schwenkwelle (5) durch mindestens eine an der Klappe (2) befestigte Buchse (3) verbunden ist, wobei die Buchse (3) einen größeren Durchmesser als der Durchmesser der Schwenkwelle (5) hat;
- der Verschlussteil des Verschlusselements (9') ebenfalls an der Schwenkwelle (5) befestigt ist, so dass die Betätigung des Verschlusselements (9') ebenfalls durch den Antriebsmechanismus (10) gesteuert wird, d.h. die Betätigung des Verschlussteils (9") des Verschlusselements (9') findet hauptsächlich dann statt, wenn sich der Antriebsmechanismus im deaktivierten Modus befindet.

2. Ventilkörper (1) nach Anspruch 1, **dadurch gekennzeichnet, dass** der Antriebsmechanismus (10) an der Außenseite des Ventilkörpers (1) angeordnet ist, wobei der erste Abschnitt (7) des Antriebsmechanismus (10) an einem zur Außenseite des Ventilkörpers (1) vorstehenden Teil der Schwenkwelle (5) befestigt ist, und wobei der Antriebsmechanismus (10) einen zweiten Abschnitt (8) umfasst, der mit der Außenseite des Ventilkörpers (1) verbunden ist.

3. Ventilkörper (1) nach Anspruch 2, **dadurch gekennzeichnet, dass** der Antriebsmechanismus (10) mindestens einen Kolben umfasst, dessen erstes Ende mit der Außenseite des Ventilkörpers (1) verbunden ist und dessen zweites Ende mit einem kurbelförmigen Mechanismus verbunden ist, der die lineare Bewegung des mindestens einen Kolbens in eine Drehbewegung umwandelt, wobei die Drehbewegung über den ersten Abschnitt (7) des Antriebsmechanismus (10), der an dem zur Außenseite des Ventilkörpers (1) vorstehenden Teil der Schwenkwelle (5) befestigt ist, auf die Schwenkwelle (5) übertragen wird.

4. Ventilkörper (1) nach einem der Ansprüche 1 bis 3, **dadurch gekennzeichnet, dass** die Schwenkwelle (5) mit der Innenseite des Ventilkörpers (1) durch zwei Lager (4) verbunden ist, die an der Innenseite des Ventilkörpers (1) befestigt sind, wobei mindestens eines der Lager (4) eine Drehdichtung aufweist, um die Verbindung von Fluid von der Innenseite des Ventilkörpers (1) zur Außenseite desselben durch den Teil der Schwenkwelle (5), der zur Außenseite des Ventilkörpers (1) vorsteht, zu verhindern.

5. Ventilkörper nach einem der Ansprüche 1 bis 4, **dadurch gekennzeichnet, dass** der Betätigungsmechanismus (10) durch ein Steuermodul automatisch gesteuert wird, wobei das Steuermodul die Ein- und Ausschaltmodi des Betätigungsmechanismus anhand von Betätigungsarten steuert, die mit dem Betrieb des Ventilkörpers (1) verbunden sind, wobei Sensoren verwendet werden, die innerhalb des Ventilkörpers (1) angeordnet sind.

6. Ventilkörper nach einem der Ansprüche 1 bis 5, **dadurch gekennzeichnet, dass** er ein Ende mit einer Einlassöffnung und ein Ende mit einer Auslassöffnung aufweist, wobei diese Enden Flansche aufweisen, die in einem Winkel zu einer vertikalen Ebene angeordnet sind.

7. Eine Fischpumpe (20), die Folgendes umfasst:
- eine Fütterungsstelle, um Fische zu fangen;
- mindestens einen Haupttank (23), bestehend aus:
▪ mindestens einen Stromeingang (23);
▪ mindestens eine Auslassöffnung (23"); und
▪ einen Ventilkörper (1) nach einem der Ansprüche 1 bis 6, wobei der Ventilkörper (1) an jedem Zufuhreinlass (23') und Auslass (23") angeordnet ist, um die Zufuhr- bzw. Auslassvorgänge jedes Haupttanks (23) zu steuern.

8. Fischpumpe (20) nach Anspruch 7, **dadurch gekennzeichnet, dass** der Antriebsmechanismus (10) des Ventilkörpers (1) automatisch von einem Steuermodul gesteuert wird, wobei das Steuermodul die Ein- und Ausschaltmodi des Antriebsmechanismus (10) mit Hilfe von Antriebstypen steuert, die mit dem Betrieb der Fischpumpe (20) verbunden sind, wobei Sensoren verwendet werden, die im Inneren des Ventilkörpers (10) oder in jedem Haupttank (23) angeordnet sind, um die Betriebsparameter der Fischpumpe (20) zu messen.

9. Fischpumpe (20) nach Anspruch 8, **dadurch gekennzeichnet, dass** sie mindestens einen oberen Niveausensor umfasst, der in mindestens einem Haupttank (23) angeordnet ist, wobei die Betätigung des Niveausensors das Anlegen eines Vakuums in dem Haupttank (23) stoppt, wobei es eine Zeit t gibt, um von dem aktivierten Modus in den deaktivierten Modus des Antriebsmechanismus (10) zu wechseln, wodurch die Klappe (2) geschlossen wird, wobei die Zeit t vordefiniert und in dem Steuermodul, das den Antriebsmechanismus (10) betreibt, programmiert sein kann.

10. Fischpumpe (20) nach einem der Ansprüche 7 bis 9, **dadurch gekennzeichnet, dass** der Zuführungsabschnitt eine Zuführungsleitung ist, durch die die Fische in jeden Hauptbehälter (23) geleitet werden, bestehend aus einem Vakuum-Druck-Kreislauf, der einerseits, Luft in jeden Hauptbehälter (23) ansaugt, wodurch sich die Klappe (2) des Ventilkörpers (1) in ihre offene Position bewegt und die Fische in jeden Hauptbehälter (23) eintreten, und andererseits Luft in den Hauptbehälter (23) einbläst, sobald die Fütterung der Fische abgeschlossen ist.

11. Fischpumpe (20) nach Anspruch 10, **dadurch gekennzeichnet, dass** das Stopfenelement (9') des Ventilkörpers (1) einen Dichtungsabschnitt (9") umfasst, der so konfiguriert ist, dass er eine Fläche der Klappe (2) des Ventilkörpers (1) berührt und niederdrückt, wenn sie sich in der geschlossenen Position befindet, und sie in der geschlossenen Position hält;
wobei der deaktivierte Modus des Betätigungsmechanismus (10) das Aufrechterhalten eines Schließdrucks auf die Klappe (2) umfasst, so dass die Klappe (2) durch den Schließabschnitt des Stopfenelements (9') in ihren Sitz (6) gedrückt wird; und
wenn die Fischpumpe (20) mindestens zwei Hauptbehälter umfasst, hält der Dichtungsabschnitt die Klappen (2) eines ersten Hauptbehälters (23), der sich in einem Vakuumzyklus befindet, geschlossen, während ein zweiter Behälter sich in einem Druckzyklus befindet.

12. Fischpumpe (20) nach Anspruch 11, **dadurch gekennzeichnet, dass** der Vakuum-Druck-Kreislauf ein Vakuum/Druck-Ventil mit kontrollierter Öffnung umfasst.

13. Fischpumpe (20) nach einem der Ansprüche 7 bis 12, **dadurch gekennzeichnet, dass** der Fütterungsabschnitt ein Fütterungstablett (21) ist, das die Fische durch Schwerkraft in jeden Haupttank (23) füttert und einen Druckbeaufschlagungskreislauf umfasst, der nach Abschluss der Fütterung der Fische Luft in jeden Haupttank (23) einbläst.

## Revendications

1. Un corps de vanne (1) pour une pompe à poisson, comprenant:
- un clapet de non-retour à clapet, ci-après défini comme un clapet (2), le clapet (2) étant conçu pour se déplacer de manière pivotante dans une trajectoire de fermeture vers une position fermée et dans une trajectoire d'ouverture vers une position ouverte;
- un arbre pivot (5) situé à l'intérieur du corps de valve (1), dans lequel le clapet (2) est conçu pour se déplacer de manière pivotante autour de l'arbre pivot (5);
- un siège de clapet (6) disposé à l'intérieur du corps de valve (1); et
- au moins un mécanisme d'entraînement (10), dans lequel ledit mécanisme d'entraînement (10) est configuré pour fonctionner en mode marche et en mode arrêt;
dans lequel le mécanisme d'entraînement (10) comprend une première section (7) fixée à l'arbre pivot (5), de sorte que lorsque le mécanisme d'entraînement (10) est en mode activé, ladite première section (7) se déplace conjointement avec l'arbre pivot (5), provoquant la rotation de cet arbre pivot (5) sur lui-même, vers une position activée;
dans lequel l'arbre pivot (5) comprend au moins un élément d'obturation (9') fixé audit arbre pivot (5);
dans lequel, pendant le fonctionnement du corps de vanne (1):
- le mécanisme d'entraînement (10) peut être mis en mode activé à la demande de l'utilisateur en tournant l'arbre pivot (5) en position activée, une partie dudit au moins un élément d'obturation (9') situé sous le clapet (2) bloquant le passage de fermeture du clapet (2) et le maintenant dans ladite position ouverte, le clapet (2) pivotant librement en position ouverte dans la trajectoire d'ouverture, le clapet (2) pivotant librement en position ouverte dans la trajectoire d'ouverture; à la demande de l'utilisateur, le mécanisme d'entraînement (10) peut être mis en mode activé en tournant l'arbre pivot (5) en position activée le clapet (2) pivote librement en position ouverte dans la trajectoire d'ouverture;
- le mécanisme d'entraînement (10) peut être en mode désactivé à la demande de l'utilisateur, en faisant tourner l'arbre pivotant (5) et le au moins un élément d'obturation (9') vers une position désactivée dans laquelle la partie de la ledit au moins un élément d'obturation (9') situé sous le clapet, est séparé du clapet (2) en dehors de la plage de mouvement de la trajectoire de fermeture, dans lequel le clapet (2) pivote librement dans le chemin de fermeture vers la position fermée, en contact avec un siège du clapet (6) disposé à l'intérieur du corps de vanne (1), qui assure une fermeture étanche du clapet (2), et dans lequel une partie étanche (9") de l'élément de clapet (9') est configurée pour entrer en contact et appuyer sur une face du clapet (2), dans lequel le mode désactivé du mécanisme d'actionnement (10) comprend le maintien d'une pression de fermeture (100) sur le clapet (2) de manière à ce que le clapet (2) soit pressé dans le siège du clapet (6) à travers la partie d'étanchéité (9") de l'élément d'obturation (9');
Où
- le clapet (2) est relié à l'arbre pivot (5) par au moins une bague (3) fixée au clapet (2), ladite bague (3) ayant un diamètre supérieur à celui de l'arbre pivot (5);
- la partie de fermeture de l'élément de bouchage (9') est également fixée à l'arbre pivot (5), de sorte que le fonctionnement de l'élément de bouchage (9') est également contrôlé par le mécanisme d'entraînement (10), c'est-à-dire que le fonctionnement de la partie de fermeture (9") de l'élément de bouchage (9') a lieu principalement lorsque le mécanisme d'entraînement est en mode désactivé.

2. Le corps de vanne (1) selon la revendication 1, **caractérisé en ce que** le mécanisme d'entraînement (10) est disposé à l'extérieur du corps de vanne (1), dans lequel la première section (7) du mécanisme d'entraînement (10) est fixée à une partie de l'arbre pivot (5) faisant saillie vers l'extérieur du corps de vanne (1), et dans lequel le mécanisme d'entraînement (10) comprend une deuxième section (8) reliée à l'extérieur du corps de vanne (1).

3. Le corps de vanne (1) selon la revendication 2, **caractérisé en ce que** le mécanisme d'entraînement (10) comprend au moins un piston avec une première extrémité reliée à l'extérieur du corps de vanne (1) et une deuxième extrémité reliée à un mécanisme de type manivelle, qui transforme le mouvement linéaire de l'au moins un piston en un mouvement de rotation, ledit mouvement de rotation étant transmis à l'arbre pivot (5) par la première section (7) du mécanisme d'entraînement (10) qui est fixée à la partie de l'arbre pivot (5) faisant saillie vers l'extérieur du corps de vanne (1).

4. Le corps de vanne (1) selon l'une des revendications 1 à 3, **caractérisé en ce que** l'arbre pivot (5) est relié à l'intérieur du corps de vanne (1) par deux paliers (4) fixés à l'intérieur du corps de vanne (1), dans lequel au moins l'un de ces paliers (4) a un joint tournant pour empêcher la communication de fluide de l'intérieur du corps de vanne (1) à l'extérieur de celui-ci à travers la partie de l'arbre pivot (5) faisant saillie vers l'extérieur du corps de vanne (1).

5. Le corps de vanne selon l'une des revendications 1 à 4, **caractérisé par le fait que** le mécanisme d'actionnement (10) est contrôlé automatiquement par un module de commande, dans lequel ledit module de commande contrôle les modes marche et arrêt du mécanisme d'actionnement au moyen de types d'actionnement associés au fonctionnement du corps de vanne (1), en utilisant des capteurs disposés dans le corps de vanne (1).

6. Le corps de vanne selon l'une des revendications 1 à 5, **caractérisé en ce qu'**il comprend une extrémité avec une ouverture d'entrée et une extrémité avec une ouverture de sortie, dans laquelle ces extrémités ont des brides inclinées par rapport à un plan vertical.

7. Pompe à poisson (20) comprenant:
- une section d'alimentation, pour le prélèvement de poissons;
- au moins un réservoir principal (23) comprenant:
▪ au moins une entrée d'alimentation (23);
▪ au moins une sortie d'évacuation (23"); et
▪ un corps de vanne (1) selon l'une quelconque des revendications 1 à 6, le corps de vanne (1) étant disposé à chaque entrée d'alimentation (23') et sortie de décharge (23") pour contrôler les opérations d'alimentation et de décharge de chaque réservoir principal (23), respectivement.

8. La pompe à poisson (20) selon la revendication 7, **caractérisée par le fait que** le mécanisme d'entraînement (10) du corps de vanne (1) est automatiquement contrôlé par un module de commande, dans lequel ledit module de commande contrôle les modes marche et arrêt du mécanisme d'entraînement (10) au moyen de types d'entraînement associés au fonctionnement de la pompe à poisson (20), en utilisant des capteurs disposés à l'intérieur du corps de vanne (10) ou à l'intérieur de chaque réservoir principal (23) pour mesurer les paramètres de fonctionnement de la pompe à poisson (20).

9. La pompe à poisson (20) selon la revendication 8, **caractérisée en ce qu'**elle comprend au moins un capteur de niveau supérieur disposé à l'intérieur d'au moins un réservoir principal (23), dans lequel l'actionnement dudit capteur de niveau arrête l'application du vide à l'intérieur du réservoir principal (23), dans lequel il y a un temps t pour passer du mode activé au mode désactivé du mécanisme d'entraînement (10), entraînant la fermeture du clapet (2), dans lequel ledit temps *t* peut être prédéfini et programmé dans le module de commande actionnant le mécanisme d'entraînement (10).

10. La pompe à poissons (20) selon l'une quelconque des revendications 7 à 9, **caractérisée en ce que** la section d'alimentation est une conduite d'alimentation par laquelle les poissons sont dirigés vers chaque réservoir principal (23), consistant en un circuit vide-pression qui, d'une part, aspire de l'air dans chaque réservoir principal (23), ce qui fait que le clapet (2) du corps de la vanne (1) se met en position ouverte et que les poissons entrent dans chaque réservoir principal (23), et, d'autre part, injecte de l'air dans le réservoir principal (23) une fois que l'alimentation des poissons est terminée.

11. Pompe à poisson (20) selon la revendication 10, **caractérisée par le fait que** l'élément d'obturation (9') du corps de vanne (1) comprend une partie étanche (9") configurée pour entrer en contact avec une face du clapet (2) du corps de vanne (1) et l'enfoncer lorsqu'il est en position fermée, afin de le maintenir dans ladite position fermée;
dans lequel le mode désactivé du mécanisme d'actionnement (10) comprend le maintien d'une pression de fermeture sur le clapet (2) de manière à ce que le clapet (2) soit pressé dans son siège (6) à travers la partie de fermeture de l'élément d'obturation (9'), et
lorsque la pompe à poisson (20) comprend au moins deux réservoirs principaux, la partie étanche maintient fermés les clapets (2) d'un premier réservoir principal (23) qui se trouve dans un cycle de vide, tandis qu'un second réservoir se trouve dans un cycle de pression.

12. Pompe à poisson (20) selon la revendication 11, **caractérisée par le fait que** le circuit de vide et de pression comprend une soupape de vide et de pression à ouverture contrôlée.

13. La pompe à poissons (20) selon l'une des revendications 7 à 12, **caractérisée par le fait que** la section d'alimentation est un plateau d'alimentation (21) qui alimente les poissons dans chaque réservoir principal (23) par gravité, comprenant un circuit de pressurisation qui injecte de l'air dans chaque réservoir principal (23) une fois que l'alimentation des poissons est terminée.
